# EUROPEAN PATENT SPECIFICATION

(11) **EP 2 957 180 B1**
(45) Date of publication and mention of the grant of the patent: **14.03.2018**
(21) Application number: 14173196.8
(22) Date of filing: 19.06.2014
(51) Int. Cl.: A23C 9/123, A23C 9/133, A23C 19/032

(54) **Method of producing a fermented milk product with improved control of post acidification**
Verfahren zur Herstellung eines gegärten Milchprodukts mit verbesserter Steuerung der Nachsäuerung
Procédé de production d'un produit laitier fermenté avec contrôle amélioré de post-acidification

(43) Date of publication of application: 23.12.2015
(73) Proprietor: Chr. Hansen A/S, 2970 Hørsholm (DK)
(72) Inventor: Garrigues, Christel, DK-1963 Frederiksberg C (DK); Gilleladen, Christian, DK-1674 Copenhagen V (DK); Curic-Bawden, Mirjana, Brookfield, WI Wisconsin 53005 (US); Janzen, Thomas, DK-2700 Broenshoej (DK); Birkelund, Mimi, DK-3310 Oelsted (DK); Buchhorn, Gäelle Lettier, 2830 Virum (DK); Soerensen, Kim Ib, DK-3520 Farum (DK); Christensen, Nanna, DK-2300 Copenhagen S (DK); Svane, Claus, DK-2960 Rungsted Kyst (DK); Riis, Soeren, DK-2610 Roedovre (DK); Pedersen, Martin Bastian, IT-22071 Cadorago Como (IT)

(56) References cited:
- EP-A1- 1 929 875
- WO-A1-2013/160413
- WO-A1-2013/169205
- WO-A2-2010/139765
- WO-A2-2011/000879
- CN-A- 103 215 199
- DE-A1- 3 146 198
- FR-A1- 2 224 096
- US-A1- 2005 196 388
- DATABASE FSTA [Online] INTERNATIONAL FOOD INFORMATION SERVICE (IFIS), FRANkFURT-MAIN, DE; SUN YI-LIN ET AL: "The correlation of growth performance and postacidification properties of Lactobacillus delbrueckii subsp. bulgaricus.", Database accession no. FS-2013-03-Ad1465
- MERCADE M ET AL: "Metabolism of Lactococcus lactis subsp. cremoris MG 1363 in acid stress conditions", INTERNATIONAL JOURNAL OF FOOD MICROBIOLOGY, ELSEVIER BV, NL, vol. 55, no. 1-3, 10 April 2000 (2000-04-10), pages 161-165, XP027347022, ISSN: 0168-1605 [retrieved on 2000-04-10]

## Description

### FIELD OF THE INVENTION

The present invention relates to methods of producing a fermented milk product comprising steps, wherein milk is fermented by a starter culture comprising lactic acid bacteria and wherein the fermentation is terminated by a decrease of the concentration of the carbohydrates that can be metabolized by the lactic acid bacteria. The methods of the present invention provide an improved control of post-acidification, i.e. the acidification caused by the bacteria after the termination of the fermentation, for example during further processing and storage.

### BACKGROUND OF THE INVENTION

Most of the current methods for producing fermented milk products can be characterized by the following series of steps:
(a) milk is fermented using a starter culture comprising lactic acid bacteria (or LAB) capable of metabolizing glucose obtained from lactose present in the milk;
(b) the fermentation causes the production of lactic acid, which causes a decrease of the pH from initially 6.4 to 6.8 (for cow milk) to a range between pH 3.8 and 4.7;
(c) the fermentation is terminated by rapid cooling of the fermented milk product once the pH desired for the fermented product at issue has been reached.

This method is for example used to produce yoghurt and yoghurt beverages.

The rapid cooling of the fermented milk product at a predetermined pH value is carried out to terminate fermentation. Without cooling of the fermented product, the fermentation would continue. However, rapid cooling has disadvantages, as it leads to loss of texture. Avoiding a rapid cooling step would also spare a unit operation and thus reduce production costs.

Even in methods comprising a rapid cooling step, post-acidification is observed, i.e. the production of lactic acid by the LAB after the termination of fermentation, i.e. after the desired pH has been reached. Post-acidification is considered to represent one of the most important problems during fermentation of milk products today. The further decrease of pH value during processing and storage of the fermented milk product leads to problems with elevated acidity and reduced shelf life.

One of the approaches for controlling post-acidification resides in producing milk products with a relatively acidic pH. In these methods the further growth of the LAB and the production of lactic acid is inhibited by the acidic pH. However, the further production of lactic acid is only inhibited and not completely terminated and the method is obviously unsuitable for the production of fermented milk products with a mild taste.

It was assumed that post-acidification is controlled by the metabolic activity of *L. bulgaricus* and caused by peptide uptake and strains with a deficiency in amino acid metabolism were generated to control post-acidification (US2010/0021586 and WO2006/042862A1). Other approaches for controlling post-acidification have been described in the prior art and include processes based on the use of specific LAB strains characterized by weakly post-acidifying activity (WO2010/139765).

An alternative approach for minimizing post-acidification is based on the control of the ratio of protein to lactose, the control of the buffering capacity and the maintenance of the buffering capacity and the pH within a predetermined range during fermentation (WO2013/169205). However, this approach requires the determination of a number of process parameters during fermentation and may require the addition of proteins or lactose or a buffer to the fermentation medium to ensure that the predetermined ranges are maintained during fermentation.

US2005/196388 in claim 1 discloses a mutant strain of L. *bulgaricus* lacking beta-galactosidase activity, wherein the mutant strain carries a non-sense mutation in one of the coding sequences of the lactose operon. The mutant may be used in a method for preparing a fermented milk product. The growth and acidification of the mutant strain is much slower than its mother strain, however the mutant strain is capable of growing on added glucose.

There is evidently still a need for improving methods for producing fermented milk products, which methods provide a better control of the post-acidification activity in the fermented milk product.

### SUMMARY OF THE I NVENTION

This problem is now solved by the methods of the present invention, which provide a milk product with extremely low post-acidification activity.

In particular, the present invention provides a method of producing a fermented milk product comprising a step wherein milk is fermented, wherein:
(a) the fermentation is initiated by a starter culture, which starter culture comprises lactic acid bacteria capable of metabolizing one or several carbohydrates added to the milk,
(b) the fermentation is terminated by a decrease of the concentration of the one or several carbohydrates during fermentation, wherein the termination of fermentation is controlled by the concentration of carbohydrates in the milk to be fermented, and wherein at the termination of fermentation the concentration of the carbohydrate metabolized by the lactic acid bacteria is in the range of between 5 mg/g and 0.01 mg/g,
(c) the decrease is at least also caused by the metabolic activity of the lactic acid bacteria, and
(d) the fermentation is carried out by a method using a starter culture comprising at least one lactose-deficient *Streptococcus thermophilus* and at least one lactose-deficient lactose-deficient *Lactobacillus delbrueckii* subsp. *bulgaricus,* wherein the carbohydrate is a fermentable carbohydrate different from lactose.

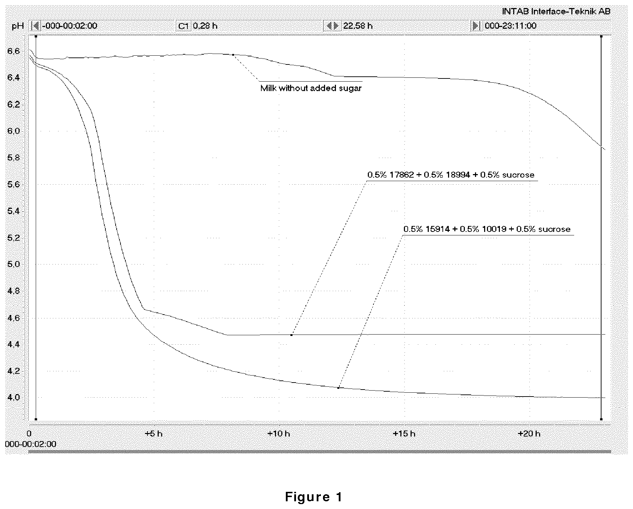

The present inventors surprisingly found that the termination of fermentation can be controlled by the concentration of carbohydrates in the milk to be fermented without significantly affecting the efficiency or time required for the fermentation. This is surprising as it was assumed that a reduction of the carbohydrates present in the milk that are available for the LAB for fermentation would inhibit or delay the fermentation process and thus result in an inefficient process that cannot be used for large scale production of fermented milk products, such as yoghurt. The inventors were further surprised to note that the fermentation process rapidly proceeds up to a point, where essentially all the carbohydrates have been consumed by the LAB and then terminates almost completely (Figure 1; 1% lactose). It was expected that the fermentation process in the presence of a very low concentration of carbohydrates available for the LAB would result in a low acidification activity of the LAB over an extended period of In a particular embodiment, the fermented milk product is characterized in that the pH value of the product is maintained within a range of 0.3 pH units if stored after termination of the fermentation at the temperature used for fermentation in step (ii) over a period of 20 hours.

This does not mean that the method necessarily includes a step, wherein the fermented milk product is maintained over a period of 20 hours after termination of the fermentation at the temperature used for fermentation in step (ii). This is just a functional test that can be used to confirm low post-acidification. Maintaining a pH value pH of a fermented milk product within a range of 0.3 pH units over a period of 20 hours if stored at a temperature for fermentation is an indication of very low post-acidification.

In a further embodiment, the present invention is directed to methods for producing a fermented milk product which are characterized by essentially no post-acidification, and wherein the fermented milk product is characterized in that the pH value of the product is maintained within a range of 0.1 pH units if stored after termination of the fermentation at the temperature used for fermentation in step (ii) over a period of 20 hours. Maintaining a pH value of a fermented milk product within a range of 0.1 pH units over a period of 20 hours if stored at a temperature for fermentation is an indication of absence of post-acidification.

In a further particular embodiment, the present invention provides methods of producing a fermented milk product, wherein the fermented product is packaged at a temperature between 15 and 45 °C.

Due to the low post-acidification this method does not require a cooling step after the fermentation.

The present invention further provides fermented milk products obtained by these methods. These fermented milk products are characterized by maintaining the pH value of the product within a range of 0.3 pH units over a period of 20 hours if stored at the temperature used for fermentation. The products are further characterized by a very low concentration of the carbohydrates that can be metabolized by the LAB used for the fermentation. Other carbohydrates may be present in significantly higher concentration.

### DETAILED DISCLOSURE OF THE INVENTION

In general the present invention provides a method of producing a fermented milk product comprising a step wherein milk is fermented, wherein:
(a) the fermentation is initiated by a starter culture, which starter culture comprises lactic acid bacteria capable of metabolizing one or several carbohydrates added to the milk,
(b) the fermentation is terminated by a decrease of the concentration of the one or several carbohydrates during fermentation, wherein the termination of fermentation is controlled by the concentration of carbohydrates in the milk to be fermented, and wherein at the termination of fermentation the concentration of the carbohydrate metabolized by the lactic acid bacteria is in the range of between 5 mg/g and 0.01 mg/g,
(c) the decrease is at least also caused by the metabolic activity of the lactic acid bacteria, and
(d) the fermentation is carried out by a method using a starter culture comprising at least one lactose-deficient *Streptococcus thermophilus* and at least one lactose-deficient lactose-deficient *Lactobacillus delbrueckii* subsp. *bulgaricus,* wherein the carbohydrate is a fermentable carbohydrate different from lactose.

In the context of the present application, the term "milk" is broadly used in its common meaning to refer to liquids produced by the mammary glands of animals or by plants. In accordance with the present invention the milk may have been processed and the term "milk" includes whole milk, skim milk, fat-free milk, low fat milk, full fat milk, lactose-reduced milk, or concentrated milk. Fat-free milk is non-fat or skim milk product. Low-fat milk is typically defined as milk that contains from about 1% to about 2% fat. Full fat milk often contains 2% fat or more. The term "milk" is intended to encompass milks from different mammals and plant sources. Mammal sources of milk include, but are not limited to cow, sheep, goat, buffalo, camel, llama, mare and deer. Plant sources of milk include, but are not limited to, milk extracted from soy bean, pea, peanut, barley, rice, oat, quinoa, almond, cashew, coconut, hazelnut, hemp, sesame seed and sunflower seed.

In the methods and products of the present invention, milk derived from cows is most preferably used as a starting material for the fermentation.

Lactose-reduced milk is commercially available (for example from Select Milk Producers Inc., Texas, USA). Lactose-reduced milk can be produced according to any method known in the art, including hydrolyzing the lactose by lactase enzyme to glucose and galactose, or by nano-filtration, electrodialysis, ion exchange chromatography and centrifugation.

The tem "milk base" is broadly used in the present application to refer to a composition based on milk or milk components which can be used as a medium for growth and fermentation of LAB. The milk base comprises components derived from milk and any other component that can be used for the purpose of growing or fermenting LAB.

In the context of the present application, the term "lactic acid bacteria" or "LAB" is used to refer to food-grade bacteria producing lactic acid as the major metabolic end-product of carbohydrate fermentation. These bacteria are related by their common metabolic and physiological characteristics and are usually Gram positive, low-GC, acid tolerant, non-sporulating, non-respiring, rod-shaped bacilli or cocci. During the fermentation stage, the consumption of lactose by these bacteria causes the formation of lactic acid, reducing the pH and leading to the formation of a protein coagulum. These bacteria are thus responsible for the acidification of milk and for the texture of the dairy product. As used herein, the term "lactic acid bacteria" encompasses, but is not limited to, bacteria belonging to the genus of *Lactobacillus* spp., *Bifidobacterium* spp., *Streptococcus* spp., *Lactococcus* spp., such as *Lactobacillus delbrueckii subsp. bulgaricus, Streptococcus thermophilus, Lactobacillus lactis, Bifidobacterium animalis, Lactococcus lactis, Lactobacillus paracasei, Lactobacillus plantarum, Lactobacillus helveticus, Lactobacillus acidophilus, Bifidobacterium breve* and *Leuconostoc* spp.

The fermentation step of the process for manufacturing fermented dairy products comprises the addition of a starter culture to milk. The term "starter" or "starter culture" as used in the present context refers to a culture of one or more food-grade micro-organisms, in particular lactic acid bacteria, which are responsible for the acidification of the milk base. Starter cultures may be fresh, frozen or freeze-dried. For the production of a fermented dairy product, the starter can be added in an amount from 0.01 to 3%, preferably from 0.01 to 0.025 % by volume of the total amount of milk.

The term "capable of metabolizing one or several carbohydrates present in the milk" is used in the context of the present invention to describe the metabolic activity of LAB which causes production of lactic acid as the major metabolic end-product of carbohydrate fermentation. As will be explained in more detail below, the LAB may be able to metabolize one or several carbohydrates present in the milk. The carbohydrates may be present in natural milk or may have been added to the milk.

In certain embodiments, the present invention provides methods using LAB capable to metabolize glucose. The present invention provides methods using LAB with a deficiency in lactose metabolism which LAB are capable to metabolize other carbohydrates, such as glucose.

The methods of the present invention are characterized by a step, wherein milk is fermented and the fermentation is terminated by a decrease of the concentration of the one or several carbohydrates during fermentation. This means that the LAB present in the fermentation medium can no longer produce significant amounts of lactic acid due to a very low concentration of carbohydrates that can be metabolized. In one embodiment, termination of fermentation can be characterized by a pH value that is maintained within a range of less than 0.3 pH units while the culture is maintained at the temperature used for fermentation for 20 hours. For example, if a method of producing a fermented milk product comprising a step wherein milk is fermented as described above is carried out, one can easily test whether termination of fermentation is due to a decrease of the concentration of the one or several carbohydrates during fermentation by maintaining the product at the temperature for fermentation for 20 hours. If the pH does not change by more than 0.3 pH units during that time than termination of fermentation was caused by the decrease of the concentration of the one or several carbohydrates during fermentation.

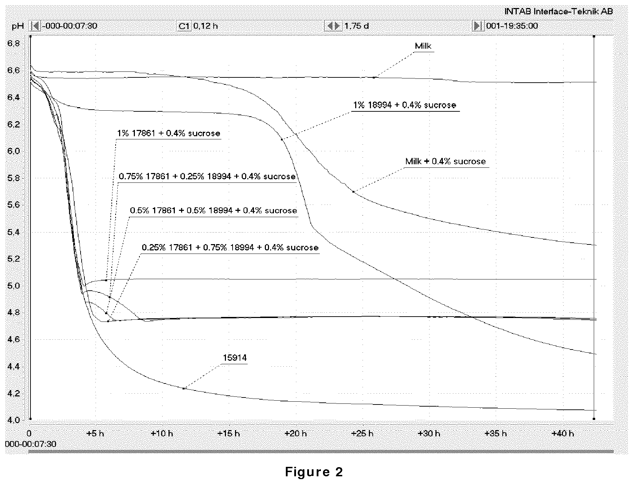

The prior art methods which terminate fermentation by cooling as soon as the desired pH is achieved cannot meet this test, as the residual carbohydrates available for metabolic activity will cause significant post-acidification at the temperature used for fermentation (Figures 2 and 3 lowest curve).

The methods of the present invention can further be characterized in that the decrease of the concentration of the carbohydrates is at least also caused by the metabolic activity of the lactic acid bacteria. This means that the lactic acid bacteria contribute to the decrease of the carbohydrates, although other components, e.g. enzymes such as lactase, may also contribute to the decrease of the carbohydrate that can be metabolized during fermentation.

In some embodiments the methods of the present invention comprise a step, wherein the fermented product is packaged at a temperature between 15 and 45 °C. As indicated above, one of the main problems of the prior art resides in the need of rapid cooling of the fermentation product to terminate fermentation. The methods of the present invention may comprise a step, wherein fermented product is packaged at a temperature between 15 and 45 °C. This shows that contrary to the prior art methods, rapid cooling is not absolutely necessary.

The termination of fermentation can be characterized by the concentration of the one or several carbohydrates that can be metabolized by the lactic acid bacteria. At the termination of fermentation the concentration of the carbohydrate metabolized by the lactic acid bacteria is in the range of between 5mg/g and 0.01mg/g.

As indicated above, the methods of producing a fermented milk product according to the present invention may further be characterized by a particularly stable pH value during storage. The fermented product may be maintained within a range of 0.3 pH units over a period of 20 hours when stored at the temperature used for fermentation.

In a further alternative, the methods of producing a fermented milk product according to the present invention can be characterized by a temperature during fermentation of between 22 and 45 °C. This temperature range includes the range used for mesophilic and thermophilic cultures.

According to one embodiment, the present invention provides a method as described above, wherein mesophilic and thermophilic cultures are both fermented at a temperature between 22 and 45 °C.

The present invention further provides fermented milk products obtained by the methods as described above. The fermented milk products of the present invention are preferably fermented food products, including yoghurt, fruit yoghurt, yoghurt beverage or cheese.

In its most preferred embodiment all methods of the present invention are methods for producing a yoghurt and the product of the present invention is yoghurt.

In the context of the present application, the term "yoghurt" refers to products comprising *Streptococcus thermophilus* and *Lactobacillus delbrueckii subsp. bulgaricus* and optionally other microorganisms such as *Lactobacillus delbrueckii subsp. lactis, Bifidobacterium animalis subsp. lactis, Lactococcus lactis, Lactobacillus acidophilus* and *Lactobacillus paracasei,* or any microorganism derived therefrom. The lactic acid strains other than *Streptococcus thermophilus* and *Lactobacillus delbrueckii subsp. bulgaricus,* are included to give the finished product various properties, such as the property of promoting the equilibrium of the flora. As used herein, the term "yoghurt" encompasses set yoghurt, stirred yoghurt, drinking yoghurt, Petit Suisse, heat treated yoghurt, Greek style yoghurt characterized by a high protein level and yoghurt-like products.

In particular, term "yoghurt" encompasses, but is not limited to, yoghurt as defined according to French and European regulations, e.g. coagulated dairy products obtained by lactic acid fermentation by means of specific thermophilic lactic acid bacteria only (i.e. *Lactobacillus delbrueckii subsp. bulgaricus* and *Streptococcus thermophilus*) which are cultured simultaneously and are found to be live in the final product in an amount of at least 10 million CFU (colony-forming unit) / g. Yoghurts may optionally contain added dairy raw materials (e.g. cream) or other ingredients such as sugar or sweetening agents, one or more flavouring(s), fruit, cereals, or nutritional substances, especially vitamins, minerals and fibers, as well as stabilizers and thickeners. In one alternative yoghurt meets the specifications for fermented milks and yoghurts of the AFNOR NF 04-600 standard and/or the codex StanA-IIa-1975 standard. In order to satisfy the AFNOR NF 04-600 standard, the product must not have been heated after fermentation and the dairy raw materials must represent a minimum of 70% (m/m) of the finished product.

Cheese, such as Mozzarella and Pizza cheese as well as Feta, can also be prepared by fermentation using a starter culture comprising *Streptococcus thermophilus* and *Lactobacillus delbrueckii* subsp. *bulgaricus* (Hoier et al. (2010) in The Technology of Cheesemaking, 2nd Ed. Blackwell Publishing, Oxford; 166-192).

### Lactose deficient LAB and methods of producing a fermented milk product using lactose deficient LAB

In a further embodiment the present invention provides lactose deficient LAB.

The terms "deficiency in lactose metabolism" and "lactose deficient" are used in the context of the present invention to characterize LAB which either partially or completely lost the ability to use lactose as a source for cell growth or maintaining cell viability. Respective LAB are capable to metabolize one or several carbohydrates selected from sucrose, galactose and/or glucose or another fermentable carbohydrate. Since these carbohydrates are not naturally present in milk in sufficient amounts to support fermentation by lactose deficient mutants, it will be necessary to add these carbohydrates to the milk. Lactose deficient and partially deficient LAB can be characterized as white colonies on a medium containing lactose and X-Gal.

As is described in detail in Example 2 below, the present inventors isolated a number of lactose deficient LAB, in particular strains of *Streptococcus thermophilus* (ST) and *Lactobacillus delbrueckii* ssp. *bulgaricus* (LB). These lactose deficient LAB metabolize sucrose.

The strains were derived from the strain CHCC15914 which is not lactose deficient. Accordingly, the present invention provides an isolated *Streptococcus thermophilus* strain, which strain is the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28909.

According to another aspect, the present invention relates to the following lactose deficient LAB strains:
(a) a *Streptococcus thermophilus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952; or
(b) a *Streptococcus thermophilus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953.

The present invention further relates to the use of these strains in the methods of producing a fermented milk product as described herein. Further, the invention relates to fermented food products, comprising one or several of the following strains:
(a) a *Streptococcus thermophilus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952; or
(b) a *Streptococcus thermophilus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953; and optionally
(c) a *Lactobacillus delbrueckii* ssp. *bulgaricus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28910.

The fermented food products can be a a yoghurt, a fruit yoghurt, a yoghurt beverage or a cheese.

In some embodiments the method is further characterized as comprising a step, wherein the fermented product is packaged at a temperature between 15 and 45 °C.

In other alternatives, the method can be characterized in that the pH value of the fermented product is maintained within a range of 0.3 pH or within a range of 0.1 pH units if stored after termination of the fermentation at the temperature used for fermentation over a period of 20 hours.

The total concentration of carbohydrates that can be metabolized by the *Streptococcus thermophilus* and the *Lactobacillus delbrueckii* ssp. *Bulgaricus* can be in the range of 30mg/g to 2mg/g, or in the range of 20mg/g 3mg/g or in the range of 10mg/g to 4mg/g.

This way of proceeding has the advantage that normal milk with a lactose concentration of around 5% (50mg/g) can be used in the production process and that the fermentation can be precisely controlled by the amount of carbohydrate added. The concentration of carbohydrate to be added can be determined in trials testing desired fermentation conditions, including final pH, temperature, starter culture, etc.

In a preferred embodiment of this alternative, the fermentation is carried out using LAB that are able to metabolize sucrose (suc+) and sucrose is added to the milk before fermentation. In one alternative the concentration of sucrose is in the range of 30mg/g to 2mg/g, or in the range of 20mg/g 3mg/g or in the range of 10mg/g to 4mg/g.

The present invention further relates to a composition comprising
(a) a Streptococcus thermophilus strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952, or
(b) a Streptococcus thermophilus strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953;
and
(c) a *Lactobacillus delbrueckii* ssp. *bulgaricus* strain, which strain is:
   (i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28910.

### FIGURE LEGENDS

Figure 1 compares the acidification activity of S. *thermophilus* CHCC15914 and *Lactobacillus delbrueckii* ssp. *bulgaricus* CHCC10019 to the acidification activity of S. *thermophilus* CHCC17862 and *lactobacillus delbrueckii* ssp. *bulgaricus* CHCC18994 when used to ferment milk supplemented with sucrose.
Figure 2 shows the acidification activity of different ratios of S. *thermophilus* CHCC17861 and *Lactobacillus delbrueckii* ssp. *bulgaricus* CHCC18994 when used to ferment milk supplemented with sucrose and compared to the acidification activity of S. *thermophilus* CHCC15914.

### LAB Strains:

The subsequent examples use CH strains, some of which have been deposited for prior patent applications of Chr. Hansen. Further information on the strains is provided by the respective patent application and the deposit as follows:
*Lactobacillus delbrueckii* ssp. *bulgaricus* CHCC10019 was deposited for WO2011/000879 with DSMZ-Deutsche Sammlung von Mikroorganismen und Zellkulturen GmbH, Inhoffenstr. 7B, D-38124 Braunschweig on 2007-04-03 under the accession no. DSM 19252.

The remaining strains used in the subsequent examples have either been deposited for the present application or are commercially available from Chr. Hansen.

### Example 1: Methods for producing a milk product using lactose deficient LAB

Lactose deficient mutants were isolated from the EPS positive strains S. *thermophilus* (ST) CHCC15914 and *Lactobacillus delbrueckii* ssp. *bulgaricus* (LB) CHCC10019. The strains were selected after UV-mutagenesis as white colonies (indicating a lactose deficient phenotype) on M17 with 1% lactose and 200 mg/ml X-Gal for CHCC15914, resp. MRS agar plates with 1% lactose and 200 mg/ml X-Gal for CHCC10019.

Both wild type strains possess β-galactosidase activity, and wild type colonies appeared blue due to the activity of the β-galactosidase.

From CHCC10019 one lactose deficient mutant was isolated and designated CHCC18994.

From CHCC15914 two lactose deficient mutants were isolated and designated CHCC17861 and CHCC17862, respectively.

The growth characteristics of the isolated lactose deficient mutants were determined as follows:
Phenotype of LB CHCC18994: lac-, suc-, gal-, glc+
Phenotype of ST CHCC17861 : lac-, suc+ , gal+, glc+
Phenotype of ST CHCC17862: lac-, suc+ , gal+, glc+

The complete lactose operon was sequenced for all three mutants and compared with the respective wild type strain to reveal the mutation type.

Comparison with the mother strain CHCC15914 revealed that CHCC17861 had an extra "T" nucleotide in the beginning of the *lacZ* gene (coding for the β-galactosidase) leading to a stop codon in the coding sequence a few nucleotides downstream of the mutation. CHCC17862 showed a deletion of one nucleotide, also interrupting the coding sequence of the *lacZ* gene.

For CHCC18994 a mutation inside the *lacZ* gene was identified. This resulted in an exchange of 8 nucleotides (5'-CTT CCA AGC-3' to 5'-CGC TAC TAT-3') and consequently a change of 3 amino acids (Leu-Pro-Ser to Arg-Tyr-Tyr) within *lacZ,* explaining the lactose deficient phenotype.

All mutants when used as single strains or in combination (ST + LB), acidify milk depending on the addition of a fermentable carbohydrate different from lactose. The acidification activity of the lactose deficient cultures were for example determined using over-night cultures in MRS (LB wt and LB lac- mutant); M17 with 1% lactose (ST wt); or M17 with different concentrations of sucrose (1% and 0.5% ; fermentation with the ST lac- mutant). The milk was inoculated and fermentation was monitored by pH development at 37 °C.

The pH development under fermentation temperature over 20 and 40 hours is illustrated in Figures 2 and 3 respectively and shows that sucrose is metabolized by the lactose deficient strains yielding a fermentation process that is nearly as fast as the process caused by the parental LAB having the ability to metabolize lactose. The sucrose driven fermentation process is immediately terminated and enters a flat line when the sucrose was depleted. After termination of the fermentation caused by carbohydrate depletion the pH remained stable at about pH 4.5. A very stable final pH was found when CHCC17861, CHCC17862, or CHCC18994, were used as single strains, or as a mix of one of the ST mutants together with the LB mutant (mix is shown in Fig. 3). This resembles the starter culture to be used in a fermentation method for producing a typical yoghurt.

No significant difference between the strains CHCC17861 and CHCC17862 could be observed. The addition of sucrose therefore provides a very precise control of acidification activity.

In some fermentations the formation of a "shoulder" was observed within the pH-curves of the mixed cultures indicating that the metabolism shifted before the acid production completely stopped (Figure 3). To investigate this further the ratio of ST: LB was changed and this led to a change in the shoulder formation. Decrease of the concentration of the lac- ST and increase of the lac- LB strain resulted in a reduction of the pH shoulder and an even more horizontal pH-"curve".

Interestingly, the use of 100% ST CHCC17861, on the other hand, leads to a completely interrupted acid production when sucrose is depleted and eliminates the pH shoulder, but the pH drop stops at a 0.3 point higher pH value (Fig. 3).

In all cases the pH remained stable at 4.75 up to the end of the fermentation period (48 hours).

In ST/LB co-fermentation the *Lactobacillus delbrueckii* subsp. *bulgaricus* part is responsible for the final pH drop and also for a major part of the post acidification. For this reason the concentration of LB is lower than the concentration of ST in most yoghurt fermentation processes.

This shows that the pH value can be completely controlled by the concentration of the added sucrose or another fermentable carbohydrate, as the *Lb. Bulgaricus* can easily be increased.

The lac- culture will not only result in a higher final pH after e.g. 6 hours, but will also have a significantly lower post-acidification and thus extended shelf life.

In some experiments it was observed that the pH was very stable for about 5 hours after termination of fermentation and then slightly declined over the next 10 hours (data not shown). This is apparently due to spontaneous revertants, i.e. LAB gaining the ability to utilize lactose by spontaneous mutation.

### DEPOSIT and EXPERT SOLUTION

The applicant requests that a sample of micro-organisms deposited for the present application as described below may only be made available to an expert, until the date on which the patent is granted.

*Streptococcus thermophilus* CHCC15914 was deposited with DSMZ-Deutsche Sammlung von Mikroorganismen und Zellkulturen GmbH, Inhoffenstr. 7B, D-38124 Braunschweig, on 2014-06-12 under the accession no. DSM 28909.

*Lactobacillus delbrueckii* ssp. *bulgaricus* CHCC18994 was deposited with DSMZ-Deutsche Sammlung von Mikroorganismen und Zellkulturen GmbH, Inhoffenstr. 7B, D-38124 Braunschweig, on 2014-06-12 under the accession no. DSM 28910.

*Streptococcus thermophilus* CHCC17861 was deposited with DSMZ-Deutsche Sammlung von Mikroorganismen und Zellkulturen GmbH, Inhoffenstr. 7B, D-38124 Braunschweig, on 2014-06-12 under the accession no. DSM 28952.

*Streptococcus thermophilus* CHCC17862 was deposited with DSMZ-Deutsche Sammlung von Mikroorganismen und Zellkulturen GmbH, Inhoffenstr. 7B, D-38124 Braunschweig, on 2014-06-12 under the accession no. DSM 28953.

The deposit was made according to the Budapest treaty on the international recognition of the deposit of microorganisms for the purposes of patent procedure.

## Claims

1. Method of producing a fermented milk product comprising a step wherein milk is fermented, wherein:
(a) the fermentation is initiated by a starter culture, which starter culture comprises lactic acid bacteria capable of metabolizing one or several carbohydrates added to the milk,
(b) the fermentation is terminated by a decrease of the concentration of the one or several carbohydrates during fermentation, wherein the termination of fermentation is controlled by the concentration of carbohydrates in the milk to be fermented, and wherein at the termination of fermentation the concentration of the carbohydrate metabolized by the lactic acid bacteria is in the range of between 5 mg/g and 0.01 mg/g,
(c) the decrease is at least also caused by the metabolic activity of the lactic acid bacteria, and
(d) the fermentation is carried out by a method using a starter culture comprising at least one lactose-deficient *Streptococcus thermophilus* and at least one lactose-deficient lactose-deficient *Lactobacillus delbrueckii* subsp. *bulgaricus,* wherein the carbohydrate is a fermentable carbohydrate different from lactose.

2. Method of producing a fermented milk product according to claim 1, wherein the lactic acid bacteria are not capable to metabolize lactose and wherein before addition of the starter culture the total concentration of carbohydrates that can be metabolized by the lactic acid bacteria in the milk is below 45mg/g.

3. Method of producing a fermented milk product according to one of claims 1 to 2, wherein the fermentation is carried out at a temperature between 30 and 45 °C.

4. Method of producing a fermented milk product according to one of claims 1 to 3, wherein after termination of fermentation the fermented product is packaged at a temperature between 15 and 45 °C.

5. Isolated LAB strain characterized as:
(a) a *Streptococcus thermophilus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952; or
(b) a *Streptococcus thermophilus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953.

6. Fermented food product, comprising one or several of the following strains:
(a) a *Streptococcus thermophilus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952; or
(b) a *Streptococcus thermophilus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953; and optionally
(c) a *Lactobacillus delbrueckii* ssp. *bulgaricus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28910.

7. A composition comprising
(a) a Streptococcus thermophilus strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28952, or
(b) a Streptococcus thermophilus strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28953;
and
(c) a *Lactobacillus delbrueckii* ssp. *bulgaricus* strain, which strain is:
(i) the strain deposited with DSMZ-Deutsche Sammlung von Mikroorganismen und Zellkulturen GmbH, Inhoffenstr. 7B, D-38124 Braunschweig, on 2014-06-12 under the accession no. DSM 28910.

## Patentansprüche

1. Verfahren zur Herstellung eines gegärten Milchprodukts, umfassend einen Schritt, bei dem Milch gegärt wird, wobei:
(a) die Gärung durch eine Starterkultur eingeleitet wird, wobei die Starterkultur Milchsäurebakterien umfasst, die in der Lage sind, ein oder mehrere der Milch zugesetzte Kohlenhydrate zu metabolisieren,
(b) die Gärung durch eine Abnahme der Konzentration des einen oder der mehreren Kohlenhydrate während der Gärung beendet wird, wobei die Beendigung der Gärung durch die Konzentration von Kohlenhydraten in der zu gärenden Milch gesteuert wird, und wobei bei der Beendigung der Gärung die Konzentration des von den Milchsäurebakterien metabolisierten Kohlenhydrats im Bereich zwischen 5 mg/g liegt und 0,01 mg/g liegt,
(c) die Abnahme mindestens auch durch die metabolische Aktivität der Milchsäurebakterien bewirkt wird, und
(d) die Gärung durch ein Verfahren unter Verwendung einer Starterkultur durchgeführt wird, die mindestens einen Lactose-defizienten *Streptococcus thermophilus* und mindestens einen Lactose-defizienten Lactose-defizienten *Lactobacillus delbrueckii* subsp. *bulgaricus* umfasst, wobei das Kohlenhydrat ein gärbares Kohlenhydrat ist, das sich von Lactose unterscheidet.

2. Verfahren zur Herstellung eines gegärten Milchprodukts nach Anspruch 1, wobei die Milchsäurebakterien nicht in der Lage sind, Lactose zu metabolisieren, und wobei vor einem Zusatz der Starterkultur die Gesamtkonzentration an Kohlenhydraten, die durch die Milchsäurebakterien metabolisiert werden können, in der Milch unter 45 mg/g liegt.

3. Verfahren zur Herstellung eines gegärten Milchprodukts nach einem der Ansprüche 1 bis 2, wobei die Gärung bei einer Temperatur zwischen 30 und 45 °C durchgeführt wird.

4. Verfahren zur Herstellung eines gegärten Milchprodukts nach einem der Ansprüche 1 bis 3, wobei das gegärte Produkt nach Beendigung der Gärung bei einer Temperatur zwischen 15 und 45 °C verpackt wird.

5. Isolierter LAB-Stamm, gekennzeichnet als:
(a) ein *Streptococcus thermophilus-Stamm,* wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28952 hinterlegte Stamm ist; oder
(b) ein *Streptococcus thermophilus-Stamm,* wobei der Stamm ist:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28953 hinterlegte Stamm ist.

6. Gegärtes Nahrungsmittelprodukt, umfassend einen oder mehrere der folgenden Stämme:
(a) ein *Streptococcus thermophilus-Stamm,* wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28952 hinterlegte Stamm ist.
(b) ein *Streptococcus thermophilus-Stamm,* wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28953 hinterlegte Stamm ist; und wahlweise
(c) ein *Lactobacillus delbrueckii* ssp. *bulgaricus-Stamm,* wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28910 hinterlegte Stamm ist.

7. Zusammensetzung, umfassend
(a) ein Streptococcus thermophilus-Stamm, wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28952 hinterlegte Stamm ist.
(b) ein Streptococcus thermophilus-Stamm, wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28953 hinterlegte Stamm ist;
und
(c) ein *Lactobacillus delbrueckii* ssp. *bulgaricus-Stamm,* wobei der Stamm:
(i) der bei der DSMZ - Deutsche Sammlung von Mikroorganismen und Zellkulturen GmbH, Inhoffenstr. 7B, D-38124 Braunschweig am 2014-06-12 unter der Zugangsnummer DSM 28910 hinterlegte Stamm ist.

## Revendications

1. Procédé de production d'un produit laitier fermenté comprenant une étape dans laquelle le lait est fermenté, dans lequel :
(a) la fermentation est initiée par une culture de départ, ladite culture de départ comprenant des bactéries lactiques, pouvant métaboliser un ou plusieurs glucides, ajoutées au lait,
(b) la fermentation est terminée par une diminution de la concentration en lesdits un ou plusieurs glucides pendant la fermentation, dans lequel la fin de la fermentation est contrôlée par la concentration en glucides dans le lait à fermenter, et dans lequel, à la fin de la fermentation, la concentration en glucides métabolisés par les bactéries lactiques est située dans la plage comprise entre 5 mg/g et 0,01 mg/g,
(c) la diminution est également au moins causée par l'activité métabolique des bactéries lactiques, et
(d) la fermentation est mise en oeuvre par un procédé utilisant une culture de départ comprenant au moins une *Streptococcus thermophilus* présentant une déficience en lactose et au moins une sous-espèce *bulgaricus* de *Lactobacillus delbrueckii* présentant une déficience en lactose, dans lequel le glucide est un glucide fermentable différent du lactose.

2. Procédé de production d'un produit laitier fermenté selon la revendication 1, dans lequel les bactéries lactiques ne sont pas capables de métaboliser le lactose et dans lequel, avant l'addition de la culture de départ, la concentration totale en glucides qui peuvent être métabolisés par les bactéries lactiques dans le lait est inférieure à 45 mg/g.

3. Procédé de production d'un produit laitier fermenté selon l'une des revendications 1 à 2, dans lequel la fermentation est mise en oeuvre à une température comprise entre 30 et 45 °C.

4. Procédé de production d'un produit laitier fermenté selon l'une des revendications 1 à 3, dans lequel, après la fin de la fermentation, le produit fermenté est conditionné à une température comprise entre 15 et 45 °C.

5. Souche isolée de bactérie lactique **caractérisée** comme étant :
(a) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 952 ; ou
(b) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 953.

6. Produit laitier fermenté, comprenant une ou plusieurs des souches suivantes :
(a) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 952 ; ou
(b) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 953 ; et éventuellement
(c) une souche de la sous-espèce *bulgaricus* de *Lactobacillus delbrueckii,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 910.

7. Composition comprenant
(a) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 952, ou
(b) une souche de *Streptococcus thermophilus,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28 953 ;
et
(c) une souche de la sous-espèce *bulgaricus* de *Lactobacillus delbrueckii,* ladite souche étant :
(i) la souche déposée auprès de la Deutsche Sammlung von Mikroorganismen und Zellkulturen GmbH (DSMZ), Inhoffenstr. 7B, D-38124 Braunschweig, le 12/06/2014 sous le numéro d'enregistrement DSM 28910.
